# EUROPEAN PATENT SPECIFICATION

(11) **EP 1 869 135 B1**
(45) Date of publication and mention of the grant of the patent: **10.02.2010**
(21) Application number: 06747354.6
(22) Date of filing: 12.04.2006
(51) Int. Cl.: C09J 133/08

(54) **ACRYLIC ADHESIVE COMPOSITION HAVING EXCELLENT IMPACT RESISTANCE, OPTICAL FILM USING THE ADHESIVE COMPOSITION, AND LIQUID CRYSTAL DISPLAY COMPRISING THE OPTICAL FILM**
ACRYL-HAFTZUSAMMENSETZUNG MIT AUSGEZEICHNETER SCHLAGFESTIGKEIT, DIE HAFTZUSAMMENSETZUNG VERWENDENDE OPTISCHE FOLIE UND FLÜSSIGKRISTALLANZEIGE MIT DER OPTISCHEN FOLIE
COMPOSITION ADHESIVE ACRYLIQUE PRESENTANT UNE EXCELLENTE RESISTANCE AUX CHOCS, FILM OPTIQUE UTILISANT CETTE COMPOSITION ADHESIVE ET ECRAN A CRISTAUX LIQUIDES POURVU D'UN TEL FILM OPTIQUE

(30) Priority: 13.04.2005 KR 20050030789
(43) Date of publication of application: 26.12.2007
(73) Proprietor: LG Chem, Ltd., Youngdungpo-gu, Seoul 150-721 (KR)
(72) Inventor: YUN, Chang-Hun, Mokpo-si Jeollanam-do 530-770 (KR); PARK, Moon-Soo, Daejeon Metropolitan City 302-743 (KR); HAN, In-Cheon, Seoul 138-161 (KR); CHO, Hyun-Ju, Gyeongsangnam-do 621-010 (KR)
(74) Representative: HOFFMANN EITLE
(86) International application number: PCT/KR2006/001347
(87) International publication number: WO 2006/109993

(56) References cited:
- JP-A- 08 209 905
- JP-A- 10 279 907
- JP-A- 2004 256 599
- KR-A- 2002 061 277
- US-A- 5 686 504

## Description

### Technical Field

The present invention relates to an acrylic adhesive composition having excellent impact resistance, an optical film using the adhesive composition, and a liquid crystal display (LCD) comprising the optical film, and in particular, to an acrylic adhesive composition having excellent impact resistance, which functions to improve resistance to external impact of an optical film for use in increasing the wide viewing angle and brightness of an image display, such as an LCD, and which functions to increase the durability of the optical film under heat and moist heat conditions, and to an optical film using such an adhesive composition and an LCD comprising the optical film. This application claims the benefit of the filing date of Korean Patent Application No. 10-2005-0030789, filed on April 13, 2005, in the Korean Intellectual Property Office, the disclosure of which is incorporated herein in its entirety by reference.

### Background Art

Typically, an LCD includes an optical film, which is composed of a liquid crystal polymer film having a liquid crystal polymer layer and a polarizing plate laminated on either or both of upper and lower surfaces of the liquid crystal polymer film, the optical film being used to provide various functions, for example, to ensure a wide viewing angle and improve brightness.

The liquid crystal polymer film is formed with a polymer layer composed of either an oriented liquid crystal monomer or an oriented liquid crystal polymer, or a composite layer having both the above monomer and the above polymer. The liquid crystal polymer film thus formed is classified, depending on 'positional order', allowing determination of the specific position of liquid crystal molecules in a crystal phase, or 'orientation order', allowing determination of the alignment direction of liquid crystal molecules at the specific position.

The liquid crystal polymer film has optically anisotropic birefringence, in which at least two among three-dimensional refractive indexes of nₓ, n_{y}, and n_{z} are different from each other, due to the positional order and orientation order. On such a birefringent material, linearly polarized light is incident, and the direction in which the retardation of light, linearly polarized in the incident direction, does not occur is defined as an optic axis.

The orientation state of the liquid crystal phase having such optical properties is largely divided into the following five types, depending on the orientation of the optic axis according to the position and the alignment direction of the liquid crystal molecules:
1. Planar orientation: the optic axis of the film is parallel to the film plane.
2. Homeotropic orientation: the optic axis of the film is perpendicular to the film plane, that is, parallel to the film normal.
3. Tilted orientation: the optic axis of the film is tilted at a predetermined angle between 0 and 90° relative to the film plane.
4. Splayed orientation: the optic axis continuously vanes at the tilt angle from 0 to 90° or from a minimum value to a maximum value within the range of 0∼90°.
5. Cholesteric orientation: the optic axis of the film is parallel to the film plane, like the planar orientation, but is rotated at a predetermined angle in a clockwise direction or a counterclockwise direction when observed perpendicular to the plane as the direction of the orientation is changed in the thickness direction.

The liquid crystal polymer film, which is formed with a polymer layer composed of either an oriented liquid crystal monomer or an oriented liquid crystal polymer or a composite layer having both the above monomer and the above polymer, has resistance to external impact inferior to a solid stretched polymer film having optically anisotropic birefringence by stretching a solid polymer in one direction, such as a stretched polycarbonate film.

Further, in the liquid crystal polymer film, the strength of impact resistance varies with the orientation state of the liquid crystal phase, which is based on the position and alignment direction of the liquid crystal molecules mentioned above.

Generally, of liquid crystal phases, liquid crystals having cholesteric orientation have the greatest impact resistance, whereas liquid crystals having homeotropic orientation have the weakest impact resistance.

In structures in which at least one of the liquid crystal polymer film, which is formed with a polymer layer composed of either an oriented liquid crystal monomer or an oriented liquid crystal polymer or a composite layer having both the above monomer and the above polymer, and the solid stretched polymer film, imparted with optically anisotropic birefrigence by stretching a solid polymer in one direction, is laminated on another functional layer, such as a stretched polycarbonate polymer film, since respective films are made of materials having different molecular structures and compositions, they have different physical properties. In particular, materials having one sided arrangement of molecular are contracted or expanded under heat or moist heat conditions, and thus dimensional stability is deteriorated, undesirably causing a problem related to durability. Moreover, partial impact due to external impact entails a phenomenon of partial dislocation of molecular arrangement, therefore partially breaking the alignment of materials having uniform molecular arrangement, resulting in liquid crystal defects.

The optical film mentioned above is formed by laminating one or more liquid crystal polymer films or solid stretched polymer films on the polarizing plate. Upon such lamination, as a means for bonding the layers, an appropriate junction layer or adhesive layer is used, and a material constituting such a layer is preferred to as an adhesive. The adhesive includes, for example, rubber, acryl, silicone, urethane, polyester, epoxy, etc. In particular, an acrylic adhesive has been widely employed for preparation of a high functional adhesive composition for use in lamination of an optical film, from the point of view of ultrahigh transparency, easy preparation process, coatability, compatibility, etc.

The physical properties of the adhesive mainly depend on the molecular weight and the molecular weight distribution of a polymer chain, and the present amount of a molecular structure thereof, among which the molecular weight and the molecular weight distribution are known to be important.

Japanese Patent Laid-open Publication Nos. 2003-227933 and 2003-227936 disclose a method of preparing a brightness improvement film comprising a protective film, a first adhesive layer, a cholesteric liquid crystal layer, a second adhesive layer, and a 1/4 wavelength plate, which are sequentially laminated, in which the first adhesive layer and the second adhesive layer are formed to have a difference in dynamic storage modulus at 25°C of at least 0.2 MPA, or the first adhesive layer adjacent to the cholesteric liquid crystal layer is formed using an adhesive having a dynamic storage modulus at 25°C of 0.1∼15 MPA, such that the brightness improvement film has good impact resistance.

However, the above patent documents merely disclose the improvement in impact resistance of the liquid crystals having cholesteric orientation that results in the greatest impact resistance among the liquid crystal phases. In recent years, there has been no mention of a method for improving the impact resistance of a vertically aligned optical film suitable for use in a retardation film or a viewing angle compensation film in LCDs such as TN (Twisted Nematic) mode, an STN (Super Twisted Nematic) mode, IPS(In Plane Switch) mode, VA(Vertical Alignment) mode, OCB(Optically Compensated Bend) mode.

In addition, the above patent documents suffer because the dynamic storage modulus of the adhesive is limited, and thus an adhesive used in a conventional process is difficult to apply. Hence, only when at least two novel adhesives are applied to the process, an optical film having improved impact resistance can result. To this end, the preparation process should be inevitably changed, which may undesirably cause additional loss due to the introduction of a novel process.

### Disclosure of Invention

### Technical Problem

In order to solve the problems encountered in the prior art as mentioned above, an object of the present invention is to provide an acrylic adhesive composition having excellent impact resistance, which functions to improve resistance to external impact of an optical film for use in increasing the wide viewing angle and brightness of an image display, and which functions to increase durability of the optical film under heat and moist heat conditions.

Another object of the present invention is to provide an optical film using the adhesive composition.

A further object of the present invention is to provide an LCD comprising the optical film.

### Technical Solution

With the aim of achieving the above objects, the present invention provides an acrylic adhesive composition, comprising (a) 100 parts by weight of an acrylic copolymer, (b) 0.01∼10 parts by weight of a crosslinking agent, and (c) 0.5∼20 parts by weight of a polymer having an amino group, the acrylic copolymer being obtained by copolymerizing (1) 0.5∼10 wt% of a vinylic monomer having no carboxyl group, (2) 0.5∼20 wt% of a vinylic monomer having a carboxyl group, and (3) a balance of a (meth)acrylic acid ester monomer having a C1∼C12 alkyl group.

In addition, the present invention provides an optical film, comprising a liquid crystal polymer film layer and a polarizing plate layer laminated on either or both of the upper and lower surfaces of the liquid crystal polymer film layer, wherein an adhesive layer is applied on either or both of the upper and lower surfaces of at least one layer of the layers constituting the optical film using the acrylic adhesive composition comprising (a) 100 parts by weight of an acrylic copolymer, (b) 0.01∼10 parts by weight of a crosslinking agent, and (c) 0.5∼20 parts by weight of a polymer having an amino group, and the acrylic copolymer being obtained by copolymerizing (1) 0.5∼10 wt% of a vinylic monomer having no carboxyl group, (2) 0.5∼20 wt% of a vinylic monomer having a carboxyl group, and (3) a balance of a (meth)acrylic acid ester monomer having a C1∼C12 alkyl group.

In addition, the present invention provides an LCD, comprising an optical film which includes a liquid crystal polymer film layer and a polarizing plate layer laminated on either or both of the upper and lower surfaces of the liquid crystal polymer film layer, wherein an adhesive layer is applied on either or both of the upper and lower surfaces of at least one layer of the layers constituting the optical film using the acrylic adhesive composition comprising (a) 100 parts by weight of an acrylic copolymer, (b) 0.01∼10 parts by weight of a crosslinking agent, and (c) 0.5∼20 parts by weight of a polymer having an amino group, and the acrylic copolymer being obtained by copolymerizing (1) 0.5∼10 wt% of a vinylic monomer having no carboxyl group, (2) 0.5∼20 wt% of a vinylic monomer having a carboxyl group, and (3) a balance of a (meth)acrylic acid ester monomer having a C1∼C12 alkyl group.

Hereinafter, a detailed description will be given of the present invention.

According to the present invention, the acrylic adhesive composition having excellent impact resistance comprises (a) 100 parts by weight of an acrylic copolymer, (b) 0.01∼10 parts, by weight of a crosslinking agent, and (c) 0.5∼20 parts by weight of a polymer having an amino group, wherein the acrylic copolymer is obtained by copolymerizing (1) 0.5∼10 wt% of a vinylic monomer having no carboxyl group, (2) 0.5∼20 wt% of a vinylic monomer having a carboxyl group, and (3) a balance of a (meth)acrylic acid ester monomer having a C1∼C12 alkyl group.

In the preparation of the acrylic copolymer, the vinylic monomer having no carboxyl group is used to control the glass transition temperature (Tg) of the adhesive of the present invention. Examples of the vinylic monomer having no carboxyl group include acrylonitrile, glycidyl(meth)acrylate, vinyl acetate, styrene, etc. These monomers may be used alone or in combinations of two or more. However, the present invention is not limited thereto, and other similar types of vinylic monomer or acrylic monomer may be used.

The vinylic monomer having no carboxyl group is used in an amount of 0.5∼20 wt%, based on the total weight of the acrylic copolymer. If the vinylic monomer having no carboxyl group is used in an amount less than 0.5 wt%, impact resistance is insignificantly improved. On the other hand, if the above amount exceeds 20 wt%, the adhesive properties are deteriorated due to excessive cohesion, resulting in poor durability.

Thereby, in the present invention, an acrylic copolymer having Tg ranging from -50 to -10°C can be obtained. As the result of experimentation, when the Tg of the acrylic copolymer is lower than -50°C, impact resistance is not improved as much as desired. On the other hand, when the Tg is higher than -10°C, coatability and durability of the adhesive may become poor.

Further, in order to control the degree of crosslinking of the adhesive of the present invention, when the acrylic copolymer is prepared, the vinylic monomer having a carboxyl group is used in an amount of 0.5∼20 wt%, with the balance of the (meth)acrylic acid ester monomer having a C1∼C12 alkyl group, based on the total weight of the acrylic copolymer.

Examples of the vinylic monomer having a carboxyl group include, but are not limited to, acrylic acid, methacrylic acid, acrylic acid dimmers, itaconic acid, maleic acid, maleic anhydride, crotonic acid, β-carboxyethyl acrylate, etc. These monomers may be used alone or in combinations of two or more.

The vinylic monomer having a carboxyl group is used in an amount of 0.5∼20 wt%, based on the total weight of the acrylic copolymer. If the vinylic monomer having a carboxyl group is used in an amount less than 0.5 wt%, the degree of crosslinking is decreased, and thus durability becomes poor. On the other hand, if the amount exceeds 20 wt%, high cohesion of the adhesive results in decreased flowability, therefore reducing the adhesion.

In the (meth)acrylic acid ester monomer having an alkyl group, when the alkyl group is in the form of a long chain, the resulting adhesive has low cohesion, and hence it is difficult to maintain cohesion at high temperatures. Therefore, upon the preparation of the acrylic copolymer, as the (meth)acrylic acid ester monomer having an alkyl group, useful is a (meth)acrylic acid ester monomer having a C1∼C12 alkyl group, preferably having a C2∼C8 alkyl group. Examples of the (meth)acrylic acid ester monomer having a C1∼C12 alkyl group include, but are not limited to, butyl acrylate, butyl methacrylate, 2-ethyl hexyl acrylate, 2-ethyl hexyl methacrylate, methyl acrylate, methyl methacrylate, ethyl acrylate, ethyl methacrylate, n-propyl acrylate, n-propyl methacrylate, iso-propyl acrylate, iso-propyl methacrylate, t-butyl acrylate, t-butyl methacrylate, pentyl acrylate, pentyl methacrylate, n-octyl acrylate, n-octyl methacrylate, iso-nonyl acrylate, iso-nonyl methacrylate, etc. These monomers may be used alone or in combinations of two or more.

Thereby, in the present invention, an acrylic copolymer having a degree of crosslinking of 50∼90% can be obtained. As the result of experimentation, when the degree of crosslinking is less than 50%, durability thereof is poor. On the other hand, when the degree of crosslinking exceeds 90%, coatability of the adhesive is deteriorated.

The acrylic copolymer, resulting from the copolymerization of the above monomers, preferably has an average molecular weight ranging from 200,000 to 2,000,000. The acrylic copolymer may be synthesized using a known polymerization process, such as solution polymerization, photopolymerization, bulk polymerization, suspension polymerization, or emulsion polymerization, and preferably using a solution polymerization process. In the solution polymerization process, the polymerization temperature may range from 50 to 140°C. Further, it is preferred that a polymerization initiator be added to the monomers which are uniformly mixed. Alternatively, radical polymerization may be conducted using an organic peroxide, such as benzoyl peroxide or lauryl peroxide, or an azo-based polymerization initiator such as azobisisobutyronitrile, as the polymerization initiator.

In the present invention, a resin composition containing a carboxylic group may formerly be prepared using 0.5∼20 wt% of the vinylic monomer having a carboxyl group and a balance of the (meth)acrylic acid ester monomer having a C1∼C12 alkyl group. The resin composition containing a carboxylic group is preferably prepared through radical polymerization using an organic peroxide, such as benzoyl peroxide or lauryl peroxide, or an azo-based polymerization initiator such as azobisisobutyronitrile, and in particular, through solution polymerization.

Upon the copolymerization of the acrylic copolymer, a functional monomer having a hydroxyl group may be further used in an amount of 0.01∼5 wt%, based on the total weight of the acrylic copolymer. The functional monomer having a hydroxyl group may be used alone or may react with a crosslinking agent to provide cohesion through chemical bonding so as to avoid deterioration of the cohesion of the adhesive upon heating. The functional monomer having a hydroxyl group is used in an amount not less than 0.01 wt%, such that the deterioration of the cohesion of the adhesive, which may occur upon heating, is prevented. On the other hand, the above monomer is added in an amount not more than 5 wt%, thereby preventing a decrease in flowability upon heating. Examples of the functional monomer having a hydroxyl group include 2-hydroxyethyl acrylate, 2-hydroxyethyl methacrylate, 2-hydroxypropyl acrylate, 2-hydroxypropyl methacrylate, 2-hydroxyethyleneglycol acrylate, 2-hydroxyethyleneglycol methacrylate, 2-hydroxypropyleneglycol acrylate, 2-hydroxypropyleneglycol methacrylate, etc. These monomers may be used alone or in combinations of two or more. However, the present invention is not limited thereto, and a monomer having a hydroxyl group, and preferably a vinylic monomer having a hydroxyl group, may be used.

The acrylic adhesive composition of the present invention includes the crosslinking agent. The crosslinking agent constituting the acrylic adhesive composition of the present invention, along with the acrylic copolymer, functions to increase the cohesion of the adhesive through the reaction with the carboxyl group of the vinylic monomer having a carboxyl group, thus enhancing the adhesion of the adhesive composition. For example, a multifunctional isocyanate crosslinking agent functions to maintain the cohesion of the adhesive upon heating through the formation of a crosslinked structure so as to increase the reliability of adhesion. As the crosslinking agent, useful are crosslinking agents that are known in the art or that are commercially available from domestic or foreign manufacturers, for example, an isocyanate crosslinking agent, an epoxy crosslinking agent, an amine resin crosslinking agent, an aziridine crosslinking agent, a metal chelate crosslinking agent, etc. Specific examples of the crosslinking agent include, but are not limited to, a multifunctional isocyanate compound, such as tolylene diisocyanate or hexamethylene diisocyanate; a multifunctional epoxy compound, such as ethyleneglycol diglycidylether, propyleneglycol diglycidylether or tetraglycidyl xylene diamine; a melamine compound, etc. These crosslinking agents may be used alone or in combinations of two or more.

In the acrylic adhesive composition of the present invention, the polymer having an amino group is contained in an amount of 0.5∼20 parts by weight, based on 100 parts by weight of the acrylic copolymer. The polymer having an amino group may be obtained by copolymerizing, based on the total weight of the polymer having an amino group, (1) 0.5∼10 with of a vinylic monomer having an amino group and (2) a balance of at least one monomer selected among C1∼C20 (meth)acrylic acid alkyl ester, C1∼C20 (meth)acrylic acid cycloalkyl ester, (meth)acrylic acid benzyl, and (meth)acrylic acid styrene. The polymer having an amino group used in the present invention preferably has an average molecular weight ranging from 1,000 to 100,000.

Examples of the polymer having an amino group include, but are not limited to, aminoethyl acrylate, aminoethyl methacrylate, dimethylaminoethyl acrylate, dimethylaminoethyl methacrylate, dimethylaminopropyl acrylate, dimethylaminopropyl methacrylate, vinyl pyridine, etc. These polymers may be used alone or in combinations of two or more.

It is understood that the polymer having an amino group is introduced to solve the problem of deteriorating the durability of the adhesive containing a carboxyl group due to foam generated by stress when used for a long period of time. When the polymer having an amino group is included in the acrylic adhesive composition of the present invention, an interaction between the carboxyl group and the amino group occurs, thus inhibiting the generation of foam and improving durability.

The polymer having an amino group is preferably prepared through radical polymerization using an organic peroxide such as benzoyl peroxide or lauryl peroxide, or an azo-based polymerization initiator such as azobisisobutyronitrile, and in particular, through solution polymerization.

When the polymer having an amino group is contained in an amount less than 0.5 parts by weight, based on 100 parts by weight of the acrylic copolymer, impact resistance is poor due to insufficient reaction. On the other hand, when the above amount exceeds 20 parts by weight, the adhesive properties are changed, leading to deteriorated durability.

In addition, the acrylic adhesive composition of the present invention further includes 1∼100 parts by weight of an adhesiveness-fortifying-resin, based on 100 parts by weight of the acrylic copolymer. The adhesiveness-fortifying-resin is used to fortify adhesion to the acrylic adhesive composition of the present invention. Examples thereof include a hydrocarbon resin, a hydrogenated hydrocarbon resin, a rosin resin, a hydrogenated rosin resin, a rosin ester resin, a hydrogenated rosin ester resin, a terpene resin, a hydrogenated terpene resin, a terpene phenol resin, a hydrogenated terpene phenol resin, a polymerized rosin resin, and a polymerized rosin ester resin. These resins may be used alone or in combinations of two or more.

In addition, the acrylic adhesive composition of the present invention may further include an additive, such as a UV stabilizer, an antioxidant, a reinforcing agent, a filler, etc., depending on general purposes, the additive being commercially available from domestic and foreign manufacturers and being used in an appropriate amount.

In the case where the acrylic adhesive composition of the present invention is applied to an optical film including a liquid crystal layer having cholesteric orientation and, as well, to an optical film including a liquid crystal layer having any orientation state, it can provide impact resistance and durability under heat or moist heat conditions to the optical film. In particular, the acrylic adhesive composition of the present invention can act to improve impact resistance of a vertically aligned optical film suitable for use in a viewing angle compensation film of an IPS (In Plane Switching) mode.

In addition, the optical film according to the present invention comprises a liquid crystal polymer film layer and a polarizing plate layer laminated on either or both of upper and lower surfaces of the liquid crystal film layer, wherein an adhesive layer is applied on either or both of the upper and lower surfaces of at least one layer of the layers constituting the optical film using the acrylic adhesive composition, comprising (a) 100 parts by weight of an acrylic copolymer, (b) 0.01∼10 parts by weight of a crosslinking agent, and (c) 0.5∼20 parts by weight of a polymer having an amino group, and the acrylic copolymer being obtained by copolymerizing (1) 0.5∼10 wt% of a vinylic monomer having no carboxyl group, (2) 0.5∼20 wt% of a vinylic monomer having a carboxyl group, and (3) a balance of a (meth)acrylic acid ester monomer having a C1∼C12 alkyl group. In the optical film of the present invention, an adhesive layer having excellent impact resistance formed using the acrylic adhesive composition of the present invention is included, thereby protecting the optical film, in particular, the liquid crystal polymer layer of the optical film, from external impact, and improving the durability of the optical film under heat and moist heat conditions. Such an adhesive layer has a thickness ranging from 5 to 30 µm. If the adhesive layer is thinner than 5 µm, such a layer is difficult to realize in a practical process line, leading to low productivity. On the other hand, if the adhesive layer is thicker than 30 µm, the improvement of impact resistance is insignificant even through the Tg or degree of crosslinking is controlled.

In addition, the LCD according to the present invention comprises the optical film including a liquid crystal polymer film layer and a polarizing plate layer laminated on either or both of upper and lower surfaces of the liquid crystal film layer, wherein an adhesive layer is applied on either or both of the upper and lower surfaces of at least one layer of the layers constituting the optical film using the acrylic adhesive composition, comprising (a) 100 parts by weight of an acrylic copolymer, (b) 0.01∼10 parts by weight of a crosslinking agent, and (c) 0.5∼20 parts by weight of a polymer having an amino group, and the acrylic copolymer being obtained by copolymerizing (1) 0.5∼10 wt% of a vinylic monomer having no carboxyl group, (2) 0.5∼20 wt% of a vinylic monomer having a carboxyl group, and (3) a balance of a (meth)acrylic acid ester monomer having a C1∼C12 alkyl group. In the LCD of the present invention, the durability of the LCD itself can be improved by the use of the optical film including the adhesive layer having excellent impact resistance formed using the acrylic adhesive composition of the present invention.

### Mode for the Invention

A better understanding of the present invention may be obtained through the following examples which are set forth to illustrate, but are not to be construed as the limit of the present invention.

### [Evaluation Method]

### Degree of Crosslinking

The degree of crosslinking of the adhesive was determined by measuring the wt% of crosslinked portion which was not dissolved in a solvent using a typical process of measuring the gel content of an acrylic adhesive.

### Durability

A polarizing plate (90 mm x 170 mm) and a glass substrate (110 mm x 190 mm x 0.7 mm) were attached to upper and lower surfaces, respectively, of a liquid crystal polymer film coated with an adhesive, and an additional polarizing plate was arranged on the lower surface of the glass substrate such that the optical absorption axes of the additional polarizing plate intersected perpendicularly with that of the polarizing plate on the upper surface of the liquid crystal polymer film. At this time, a pressure of about 5 kg/cm² was applied, and the above procedure was conducted in a clean room so as to avoid the formation of foam or impurities, thus obtaining a sample. In order to evaluate moist heat resistance of the sample, the sample was allowed to stand at 60°C under relative humidity of 90% for 1000 hours, after which whether foam or peeling were generated was observed with the naked eye. In addition, for the measurement of heat resistance, the sample was allowed to stand at 80°C for 1000 hours, and then whether foam or peeling were generated was observed. Immediately before the state of the sample was evaluated, the sample was allowed to stand at room temperature for 24 hours.

### Impact Resistance

A polarizing plate (60 mm x 60 mm) and a glass substrate (110 mm x 190 mm x 0.7 mm) were attached to upper and lower surfaces, respectively, of a liquid crystal polymer film coated with an adhesive, thus obtaining a sample. 10 g of a tapered weight was dropped toward the polarizing plate of the sample. Thereafter, the sample was observed using a polarizing microscope so as to primarily measure the extent of liquid crystal defects with the naked eye, after which it was observed at 200 x magnification using an optical microscope. As such, the dropping height was controlled such that the extent of defects could be evaluated while adjusting the magnitude of the dropping energy. The dropping energy of 150 mJ obtained when dropping a 75 g weight from a height of about 20 cm was confirmed to cause liquid crystal defects similarly to the extent of external impact generally applied to an image display such as an LCD. Thus, in order to improve impact resistance, the prevention of liquid crystal defects under a dropping energy of 150 mJ was taken as a standard, and the results were judged to be good or poor.

### [Synthesis Example 1]

100 parts by weight of toluene was loaded into a reactor, the temperature of which was then maintained at 90°C with reflux of nitrogen. Subsequently, 97 parts by weight of methyl methacrylate and 3 parts by weight of dimethyl amino ethyl methacrylate were added thereto, and 1 part by weight of azobisisobutyronitrile was further added thereto, and then the reaction mixture was polymerized for 5 hours. After the termination of the reaction, the resulting reaction solution was diluted with toluene and the solid content was controlled to 45%, thus obtaining a polymer having an amino group with Tg of 91°C and an average molecular weight of 20,000.

### [Synthesis Example 2]

Into a 1000 ml reactor equipped with a cooling system for easy temperature control and nitrogen reflux, a monomer mixture comprising 80 parts by weight of n-butyl acrylate (BA), 10 parts by weight of acrylic acid (AA), and 10 parts by weight of styrene was added. As a solvent, 100 parts by weight of ethyl acetate (Eac) was added. The temperature of the reaction mixture was maintained at 60°C, and then the reaction mixture was uniformly blended, added with 0.03 parts by weight of azobisisobutyronitrile (AIBN), serving as a reaction initiator, which had been diluted to a concentration of 50% with ethyl acetate, and then allowed to react for 10 hours, thus obtaining an acrylic polymer P-1. The Tg of the polymer P-1 was determined to be - 15°C and the degree of crosslinking thereof to be 55%. Thereafter, the polymer P-1 was added with 10 parts by weight of the polymer having an amino group synthesized in Synthesis Example 1 and then with 0.5 parts by weight of tolylene diisocyanate adduct (TDI-1) of trimethylolpropane, serving as an isocyanate crosslinking agent. The resulting mixture was diluted to a concentration of 13wt% in consideration of coatability, uniformly blended, and then applied on release paper.

### [Synthesis Example 3]

Into a 1000 ml reactor equipped with a cooling system for easy temperature control and nitrogen reflux, a monomer mixture comprising 82 parts by weight of n-butyl acrylate (BA), 10 parts by weight of acrylic acid (AA), and 8 parts by weight of styrene was added. As a solvent, 100 parts by weight of ethyl acetate (Eac) was added. The temperature of the reaction mixture was maintained at 60°C, and then the reaction mixture was uniformly blended, added with 0.03 parts by weight of azobisisobutyronitrile (AIBN), serving as a reaction initiator, which had been diluted to a concentration of 50% with ethyl acetate, and then allowed to react for 10 hours, thus obtaining an acrylic polymer P-2. The Tg of the polymer P-2 was determined to be - 20°C and the degree of crosslinking thereof to be 75%. Thereafter, the polymer P-2 was added with 5 parts by weight of the polymer having an amino group synthesized in Synthesis Example 1 and then with 1.3 parts by weight of tolylene diisocyanate adduct (TDI-1) of trimethylolpropane, serving as an isocyanate crosslinking agent. The resulting mixture was diluted to a concentration of 13wt% in consideration of coatability, uniformly blended, and then applied on release paper.

### [Synthesis Example 4]

Into a 1000 ml reactor equipped with a cooling system for easy temperature control and nitrogen reflux, a monomer mixture comprising 84 parts by weight of n-butyl acrylate (BA), 9 parts by weight of acrylic acid (AA), and 7 parts by weight of styrene was added. As a solvent, 100 parts by weight of ethyl acetate (Eac) was added. The temperature of the reaction mixture was maintained at 60°C, after which the reaction mixture was uniformly blended, added with 0.03 parts by weight of azobisisobutyronitrile (AIBN), serving as a reaction initiator, which had been diluted to a concentration of 50% with ethyl acetate, and then allowed to react for 10 hours, thus obtaining an acrylic polymer P-3. The Tg of the polymer P-3 was determined to be - 25°C and the degree of crosslinking thereof to be 60%. Thereafter, the polymer P-3 was added with 14 parts by weight of the polymer having an amino group synthesized in Synthesis Example 1 and then with 1.3 parts by weight of tolylene diisocyanate adduct (TDI-1) of trimethylolpropane, serving as an isocyanate crosslinking agent. The resulting mixture was diluted to a concentration of 13wt% in consideration of coatability, uniformly blended, and then applied on release paper.

### [Synthesis Example 5]

Into a 1000 ml reactor equipped with a cooling system for easy temperature control and nitrogen reflux, a monomer mixture comprising 83 parts by weight of n-butyl acrylate (BA), 11 parts by weight of acrylic acid (AA), and 6 parts by weight of styrene was added. As a solvent, 100 parts by weight of ethyl acetate (Eac) was added. The temperature of the mixture was maintained at 60°C, after which the reaction mixture was uniformly blended, added with 0.04 parts by weight of azobisisobutyronitrile (AIBN), serving as a reaction initiator, which had been diluted to a concentration of 50% with ethyl acetate, and then allowed to react for 10 hours, thus obtaining an acrylic polymer P-4. The Tg of the polymer P-4 was determined to be - 25°C and the degree of crosslinking thereof to be 75%. Thereafter, the polymer P-4 was added with 10 parts by weight of the polymer having an amino group synthesized in Synthesis Example 1 and then with 1.5 parts by weight of tolylene diisocyanate adduct (TDI-1) of trimethylolpropane, serving as an isocyanate crosslinking agent. The resulting mixture was diluted to a concentration of 13wit% in consideration of coatability, uniformly blended, and then applied on release paper.

### [Synthesis Example 6]

Into a 1000 ml reactor equipped with a cooling system for easy temperature control and nitrogen reflux, a monomer mixture comprising 91 parts by weight of n-butyl acrylate (BA), 4 parts by weight of acrylic acid (AA), and 5 parts by weight of styrene was added. As a solvent, 100 parts by weight of ethyl acetate (Eac) was added. The temperature of the reaction mixture was maintained at 60°C, after which the reaction mixture was uniformly blended, added with 0.025 parts by weight of azobisisobutyronitrile (AIBN), serving as a reaction initiator, which had been diluted to a concentration of 50% with ethyl acetate, and then allowed to react for 10 hours, thus obtaining an acrylic polymer P-5. The Tg of the polymer P-5 was determined to be - 30°C and the degree of crosslinking thereof to be 60%. Thereafter, the polymer P-5 was added with 17 parts by weight of the polymer having an amino group synthesized in Synthesis Example 1 and then with 1 part by weight of tolylene diisocyanate adduct (TDI-1) of trimethylolpropane, serving as an isocyanate crosslinking agent. The resulting mixture was diluted to a concentration of 13wt% in consideration of coatability, uniformly blended, and then applied on release paper.

### [Synthesis Example 7]

Into a 1000 ml reactor equipped with a cooling system for easy temperature control and nitrogen reflux, a monomer mixture comprising 90 parts by weight of n-butyl acrylate (BA), 5 parts by weight of acrylic acid (AA), and 5 parts by weight of styrene was added. As a solvent, 100 parts by weight of ethyl acetate (Eac) was added. The temperature of the reaction mixture was maintained at 60°C, after which the reaction mixture was uniformly blended, added with 0.03 parts by weight of azobisisobutyronitrile (AIBN), serving as a reaction initiator, which had been diluted to a concentration of 50% with ethyl acetate, and then allowed to react for 10 hours, thus obtaining an acrylic polymer P-6. The Tg of the polymer P-6 was determined to be - 30°C and the degree of crosslinking thereof to be 70%. Thereafter, the polymer P-6 was added with 3 parts by weight of the polymer having an amino group synthesized in Synthesis Example 1 and then with 1 part by weight of tolylene diisocyanate adduct (TDI-1) of trimethylolpropane, serving as an isocyanate crosslinking agent. The resulting mixture was diluted to a concentration of 13wt% in consideration of coatability, uniformly blended, and then applied on release paper.

### [Synthesis Example 8]

Into a 1000 ml reactor equipped with a cooling system for easy temperature control and nitrogen reflux, a monomer mixture comprising 93 parts by weight of n-butyl acrylate (BA), 3 parts by weight of acrylic acid (AA), and 4 parts by weight of styrene was added. As a solvent, 100 parts by weight of ethyl acetate (Eac) was added. The temperature of the reaction mixture was maintained at 60°C, after which the reaction mixture was uniformly blended, then added with 0.03 parts by weight of azobisisobutyronitrile (AIBN), serving as a reaction initiator, which had been diluted to a concentration of 50% with ethyl acetate, and then allowed to react for 10 hours, thus obtaining an acrylic polymer P-7. The Tg of the polymer P-7 was determined to be - 35°C and the degree of crosslinking thereof to be 70%. Thereafter, the polymer P-7 was added with 10 parts by weight of the polymer having an amino group synthesized in Synthesis Example 1 and then with 1.2 parts by weight of tolylene diisocyanate adduct (TDI-1) of trimethylolpropane, serving as an isocyanate crosslinking agent. The resulting mixture was diluted to a concentration of 13wt% in consideration of coatability, uniformly blended, and then applied on release paper.

### [Synthesis Example 9]

Into a 1000 ml reactor equipped with a cooling system for easy temperature control and nitrogen reflux, a monomer mixture comprising 96 parts by weight of n-butyl acrylate (BA), 2 parts by weight of acrylic acid (AA), and 2 parts by weight of styrene was added. As a solvent, 100 parts by weight of ethyl acetate (Eac) was added. The temperature of the reaction mixture was maintained at 60°C, after which the reaction mixture was uniformly blended, added with 0.03 parts by weight of azobisisobutyronitrile (AIBN), serving as a reaction initiator, which had been diluted to a concentration of 50% with ethyl acetate, and then allowed to react for 10 hours, thus obtaining an acrylic polymer P-8. The Tg of the polymer P-8 was determined to be - 45°C and the degree of crosslinking thereof to be 85%. Thereafter, the polymer P-8 was added with 8 parts by weight of the polymer having an amino group synthesized in Synthesis Example 1 and then with 1 part by weight of tolylene diisocyanate adduct (TDI-1) of trimethylolpropane, serving as an isocyanate crosslinking agent. The resulting mixture was diluted to a concentration of 13wt% in consideration of coatability, uniformly blended, and then applied on release paper.

Each of the acrylic adhesive compositions of the present invention obtained in the synthesis examples was confirmed to have Tg ranging from -10 to -50°C and a degree of crosslinking from 50 to 90%.

### [Preparative Examples 1 to 7]

The optical films of Table 1 below were prepared by applying the adhesive compositions obtained in the synthesis examples on either or both of upper and lower surfaces of a liquid crystal polymer film (LC layer) to form an adhesive layer, and then laminating an Iodo-based polarizing plate having a thickness of 185 micrometer on the adhesive layer. The physical properties of the optical films thus obtained were measured. The results are given in Table 1 below. In the case where the adhesive composition of the present invention was applied only on either surface of the liquid crystal polymer film, the adhesive, which was prepared in Comparative Synthesis Example 1 described below, was applied on the other surface thereof, thus forming an adhesive layer.
Table 1

### [Table 1]

**[Table]**

| Pre.Ex. No. | Adhesive Compo. | Position of Adhesive Layer | Thick. (µm) | Tg (°C) | Crosslink. (%) | Impact Resist. | Durability |
|---|---|---|---|---|---|---|---|
| 1 | Syn.Ex.3 | On LC Layer | 25 | -20 | 75 | ○ | ○ |
| 2 | Syn.Ex.2 | On LC Layer | 15 | -15 | 55 | ○ | ○ |
| 3 | Syn.Ex.8 | Beneath LC Layer | 10 | -35 | 70 | ○ | ○ |
| 4 | Syn.Ex.7 D | Beneath LC Layer | 5 | -30 | 70 | ○ | ○ |
| 5 | Syn.Ex.9 | Beneath LC Layer | 10 | -45 | 85 | ○ | ○ |
| 6 | Syn.Ex.4 | On LC Layer | 15 | -25 | 60 | ○ | ○ |
| | Syn.Ex.4 | Beneath LC Layer | 15 | -25 | 60 | ○ | ○ |
| 7 | Syn.Ex.6 | On LC Layer | 10 | -30 | 60 | ○ | ○ |
| | Syn.Ex.5 | Beneath LC Layer | 20 | -25 | 75 | ○ | ○ |

### [Comparative Synthesis Example 1]

Into a 1000 ml reactor equipped with a cooling system for easy temperature control and nitrogen reflux, a monomer mixture comprising 98 parts by weight of n-butyl acrylate (BA) and 2 parts by weight of hydroxyethyl methacrylate (HEMA) was added. As a solvent, 100 parts by weight of ethyl acetate (Eac) was added. The temperature of the reaction mixture was maintained at 90°C, after which the reaction mixture was uniformly blended, added with 0.03 parts by weight of azobisisobutyronitrile (AIBN), serving as a reaction initiator, which had been diluted to a concentration of 50% with ethyl acetate, and then allowed to react for 10 hours, thus obtaining an acrylic polymer R-1. The Tg of the polymer R-1 was determined to be -60°C and the degree of crosslinking thereof to be 60%. Subsequently, the polymer R-1 was added with 1.3 parts by weight of tolylene diisocyanate adduct (TDI-1) of trimethylolpropane, serving as an isocyanate crosslinking agent, and the resulting mixture was diluted to a concentration of 13wt% in consideration of coatability, uniformly blended, and then applied on release paper.

### [Comparative Synthesis Example 2]

Into a 1000 ml reactor equipped with a cooling system for easy temperature control and nitrogen reflux, a monomer mixture comprising 85 parts by weight of n-butyl acrylate (BA) and 15 parts by weight of hydroxyethyl methacrylate (HEMA) was added. As a solvent, 100 parts by weight of ethyl acetate (Eac) was added. The temperature of the reaction mixture was maintained at 90°C, after which the reaction mixture was uniformly blended, added with 0.03 parts by weight of azobisisobutyronitrile (AIBN), serving as a reaction initiator, which had been diluted to a concentration of 50% with ethyl acetate, and then allowed to react for 10 hours, thus obtaining an acrylic polymer R-2. The Tg of the polymer R-2 was determined to be - 30°C and the degree of crosslinking thereof to be 30%. Subsequently, the polymer R-2 was added with 0.3 parts by weight of tolylene diisocyanate adduct (TDI-1) of trimethylolpropane, serving as an isocyanate crosslinking agent, and the resulting mixture was diluted to a concentration of 13wt% in consideration of coatability, uniformly blended, and then applied on release paper.

### [Comparative Synthesis Example 3]

Into a 1000 ml reactor equipped with a cooling system for easy temperature control and nitrogen reflux, a monomer mixture comprising 99 parts by weight of n-butyl acrylate (BA) and 1 part by weight of hydroxyethyl methacrylate (HEMA) was added. As a solvent, 100 parts by weight of ethyl acetate (Eac) was added. The temperature of the mixture was maintained at 90°C, after which the reaction mixture was uniformly blended, added with 0.03 parts by weight of azobisisobutyronitrile (AIBN), serving as a reaction initiator, which had been diluted to a concentration of 50% with ethyl acetate, and then allowed to react for 10 hours, thus obtaining an acrylic polymer R-3. The Tg of the polymer R-3 was determined to be -70°C and the degree of crosslinking thereof to be 50%. Subsequently, the polymer R-3 was added with 1 part by weight of tolylene diisocyanate adduct (TDI-1) of trimethylolpropane, serving as an isocyanate crosslinking agent, and the resulting mixture was diluted to a concentration of 13 wt% in consideration of coatability, uniformly blended, and then applied on release paper.

### [Comparative Synthesis Example 4]

Into a 1000 ml reactor equipped with a cooling system for easy temperature control and nitrogen reflux, a monomer mixture comprising 98 parts by weight of n-butyl acrylate (BA) and 2 part by weight of hydroxypropyl methacrylate (HPMA) was added. As a solvent, 100 parts by weight of ethyl acetate (Eac) was added. The temperature of the mixture was maintained at 90°C, after which the reaction mixture was uniformly blended, added with 0.03 parts by weight of azobisisobutyronitrile (AIBN), serving as a reaction initiator, which had been diluted to a concentration of 50% with ethyl acetate, and then allowed to react for 10 hours, thus obtaining an acrylic polymer R-4. The Tg of the polymer R-4 was determined to be -60°C and the degree of crosslinking thereof to be 70%. Subsequently, the polymer R-4 was added with 1.3 part by weight of tolylene diisocyanate adduct (TDI-1) of trimethylolpropane, serving as an isocyanate crosslinking agent, and the resulting mixture was diluted to a concentration of 13 wt% in consideration of coatability, uniformly blended, and then applied on release paper.

### [Comparative Synthesis Example 5]

Into a 1000 ml reactor equipped with a cooling system for easy temperature control and nitrogen reflux, a monomer mixture comprising 90 parts by weight of n-butyl acrylate (BA) and 10 part by weight of hydroxyethyl methacrylate (HEMA) was added. As a solvent, 100 parts by weight of ethyl acetate (Eac) was added. The temperature of the mixture was maintained at 90°C, after which the reaction mixture was uniformly blended, added with 0.03 parts by weight of azobisisobutyronitrile (AIBN), serving as a reaction initiator, which had been diluted to a concentration of 50% with ethyl acetate, and then allowed to react for 10 hours, thus obtaining an acrylic polymer R-5. The Tg of the polymer R-5 was determined to be -40°C and the degree of crosslinking thereof to be 60%. Subsequently, the polymer R-5 was added with 0.3 part by weight of tolylene diisocyanate adduct (TDI-1) of tiimethylolpropane, serving as an isocyanate crosslinking agent, and the resulting mixture was diluted to a concentration of 13 wt% in consideration of coatability, uniformly blended, and then applied on release paper.

### [Comparative Synthesis Example 6]

Into a 1000 ml reactor equipped with a cooling system for easy temperature control and nitrogen reflux, a monomer mixture comprising 85 parts by weight of n-butyl acrylate (BA) and 15 part by weight of hydroxypropyl methacrylate (HPMA) was added. As a solvent, 100 parts by weight of ethyl acetate (Eac) was added. The temperature of the mixture was maintained at 90°C, after which the reaction mixture was uniformly blended, added with 0.03 parts by weight of azobisisobutyronitrile (AIBN), serving as a reaction initiator, which had been diluted to a concentration of 50% with ethyl acetate, and then allowed to react for 10 hours, thus obtaining an acrylic polymer R-6. The Tg of the polymer R-6 was determined to be -30°C and the degree of crosslinking thereof to be 40%. Subsequently, the polymer R-6 was added with 1 part by weight of tolylene diisocyanate adduct (TDI-1) of trimethylolpiopane, serving as an isocyanate crosslinking agent, and the resulting mixture was diluted to a concentration of 13 wt% in consideration of coatability, uniformly blended, and then applied on release paper.

### [Comparative Synthesis Example 7]

Into a 1000 ml reactor equipped with a cooling system for easy temperature control and nitrogen reflux, a monomer mixture comprising 95 parts by weight of n-butyl acrylate (BA) and 5 part by weight of hydroxyethyl methacrylate (HEMA) was added. As a solvent, 100 parts by weight of ethyl acetate (Eac) was added. The temperature of the mixture was maintained at 90°C, after which the reaction mixture was uniformly blended, added with 0.03 parts by weight of azobisisobutyronitrile (AIBN), serving as a reaction initiator, which had been diluted to a concentration of 50% with ethyl acetate, and then allowed to react for 10 hours, thus obtaining an acrylic polymer R-7. The Tg of the polymer R-7 was determined to be -55°C and the degree of crosslinking thereof to be 50%. Subsequently, the polymer R-7 was added with 1.3 part by weight of tolylene diisocyanate adduct (TDI-1) of trimethylolpropane, serving as an isocyanate crosslinking agent, and the resulting mixture was diluted to a concentration of 13 wt% in consideration of coatability, uniformly blended, and then applied on release paper.

### [Comparative Preparative Examples 1 to 6]

Optical films of Table 2 below were prepared in the manner similar to in the preparative examples, with the exception that the adhesive compositions of Comparative Synthesis Examples having different Tg and degree of crosslinking were used.
Table 2

### [Table 2]

**[Table ]**

| C. Pre. Ex.No. D | Adhesive Compo. | Position of Adhesive Layer | Thick. (µm) | Tg (°C) | Crosslink.(%) | Impact Resist. | Durability |
|---|---|---|---|---|---|---|---|
| 1 | C.Syn.Ex.4 | On LC Layer | 15 | -60 | 70 | X | ○ |
| 2 | C.Syn.Ex.2 | On LC Layer | 10 | -30 | 30 | X | X |
| 3 | C.Syn.Ex.5 | Beneath LC Layer | 40 | -40 | 60 | X | X |
| 4 | C.Syn.Ex.7 | Beneath LC Layer | 10 | -55 | 50 | X | ○ |
| 5 | C.Syn.Ex.1 | On LC Layer | 25 | -60 | 60 | X | ○ |
| | C.Syn.Ex.1 | Beneath LC Layer | 25 | -60 | 60 | | |
| 6 | C.Syn.Ex.6 | On LC Layer | 5 | -30 | 40 | X | ○ |
| | C.Syn.Ex.3 | Beneath LC Layer | 20 | -70 | 50 | | |

As is apparent from Tables 1 and 2, the optical films resulting from the use of the acrylic adhesive composition of the present invention were confirmed to have impact resistance and durability superior to those of optical films obtained using conventional adhesive compositions as shown in the comparative examples.

### Industrial Applicability

The present invention provides an acrylic adhesive composition having excellent impact resistance, which functions to improve resistance to external impact of an optical film for use in increasing the wide viewing angle and brightness of an image display, such as an LCD, and which functions to increase durability of the optical film under heat and moist heat conditions, and an optical film using the adhesive composition and an LCD including the optical film.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An acrylic adhesive composition, comprising (a) 100 parts by weight of an acrylic copolymer, (b) 0.01∼10 parts by weight of a crosslinking agent, and (c) 0.5∼20 parts by weight of a polymer having an amino group, the acrylic copolymer being obtained by copolymerizing (1) 0.5∼10 wt% of a vinylic monomer having no carboxyl group, (2) 0.5∼20 wt% of a vinylic monomer having a carboxyl group, and (3) a balance of a (meth)acrylic acid ester monomer having a C1∼C12 alkyl group.

2. The composition according to claim 1, wherein the (1) vinylic monomer having no carboxyl group includes at least one selected from the group consisting of acrylonitrile, glycidyl(meth)acrylate, vinyl acetate, and styrene.

3. The composition according to claim 1, wherein the (2) vinylic monomer having a carboxyl group includes at least one selected from the group consisting of acrylic acid, methacrylic acid, acrylic acid dimmers, itaconic acid, maleic acid, maleic anhydride, crotonic acid, and β-carboxyethyl acrylate.

4. The composition according to claim 1, wherein the (3) (meth)acrylic acid ester monomer having a C1∼C12 alkyl group includes at least one selected from the group consisting of butyl acrylate, butyl methacrylate, 2-ethylhexyl acrylate, 2-ethylhexyl methacrylate, methyl acrylate, methyl methacrylate, ethyl acrylate, ethyl methacrylate, n-propyl acrylate, n-propyl methacrylate, isopropyl acrylate, isopropyl methacrylate, t-butyl acrylate, t-butyl methacrylate, pentyl acrylate, pentyl methacrylate, n-octyl acrylate, n-octyl methacrylate, isononyl acrylate, and isononyl methacrylate.

5. The composition according to claim 1, wherein the (3) (meth)acrylic acid ester monomer having a C1∼C12 alkyl group has a C2∼C8 alkyl group.

6. The composition according to claim 1, wherein the (a) acrylic copolymer is copolymerized further using 0.01∼5 wt% of a functional monomer having a hydroxyl group.

7. The composition according to claim 6, wherein the functional monomer having a hydroxyl group includes at least one selected from the group consisting of 2-hydroxyethyl acrylate, 2-hydroxyethyl methacrylate, 2-hydroxypropyl acrylate, 2-hydroxypropyl methacrylate, 2-hydroxyethyleneglycol acrylate, 2-hydroxyethyleneglycol methacrylate, 2-hydroxypropyleneglycol acrylate, and 2-hydroxypropyleneglycol methacrylate.

8. The composition according to claim 1, wherein the (a) acrylic copolymer has an average molecular weight ranging from 200,000 to 2,000,000.

9. The composition according to claim 1, wherein the (a) acrylic copolymer has a glass transition temperature ranging from -50 to -10°C and a degree of crosslinking ranging from 50 to 90%.

10. The composition according to claim 1, wherein the (b) crosslinking agent is selected from the group consisting of an isocyanate crosslinking agent, an epoxy crosslinking agent, an amine resin crosslinking agent, an aziridine crosslinking agent, and a metal chelate crosslinking agent.

11. The composition according to claim 1, wherein the (b) crosslinking agent includes at least one selected from the group consisting of tolylene diisocyanate, hexamethylene diisocyanate, ethyleneglycol diglycidylether, propyleneglycol diglycidylether, tetraglycidyl xylene diamine, and melamine compounds.

12. The composition according to claim 1, wherein the (c) polymer having an amino group has an average molecular weight ranging from 1,000 to 100,000.

13. The composition according to claim 1, wherein the (c) polymer having an amino group is obtained by copolymerizing (1) 0.5∼10 wt% of a vinylic monomer having an amino group and (2) a balance of at least one monomer selected from the group consisting of C1∼C20 (meth)acrylic acid alkyl ester, C1∼C20 (meth)acrylic acid cycloalkyl ester, (meth)acrylic acid benzyl, and (meth)aciylic acid styrene.

14. The composition according to claim 1, wherein the (c) polymer having an amino group includes at least one selected from the group consisting of aminoethyl acrylate, aminoethyl methacrylate, dimethylaminoethyl acrylate, dimethylaminoethyl methacrylate, dimethylaminopropyl acrylate, dimethylaminopropyl methacrylate, and vinyl pyridine.

15. The composition according to claim 1, further comprising 1∼100 parts by weight of an adhesiveness-fortifying-resin based on 100 parts by weight of the acrylic copolymer.

16. The composition according to claim 15, wherein the adhesiveness-fortifying-resin includes at least one selected from the group consisting of a hydrocarbon resin, a hydrogenated hydrocarbon resin, a rosin resin, a hydrogenated rosin resin, a rosin ester resin, a hydrogenated rosin ester resin, a terpene resin, a hydrogenated terpene resin, a terpene phenol resin, a hydrogenated terpene phenol resin, a polymerized rosin resin, and a polymerized rosin ester resin.

17. An optical film, comprising a liquid crystal polymer film layer and a polarizing plate layer laminated on either or both of upper and lower surfaces of the liquid crystal polymer film layer, wherein an adhesive layer is applied on either or both of upper and lower surfaces of at least one layer of layers constituting the optical film using the acrylic adhesive composition of any one of claims 1 to 16, comprising (a) 100 parts by weight of an acrylic copolymer, (b) 0.01∼10 parts by weight of a crosslinking agent, and (c) 0.5∼20 parts by weight of a polymer having an amino group, and the acrylic copolymer being obtained by polymerizing (1) 0.5∼10 wt% of a vinylic monomer having no carboxyl group, (2) 0.5∼20 wt% of a vinylic monomer having a carboxyl group, and (3) a balance of a (meth)acrylic acid ester monomer having a C1∼C12 alkyl group.

18. The optical film according to claim 17, wherein the adhesive layer is 5∼30 µm thick.

19. A liquid crystal display, comprising an optical film which includes a liquid crystal polymer film layer and a polarizing plate layer laminated on either or both of upper and lower surfaces of the liquid crystal polymer film layer, wherein an adhesive layer is applied on either or both of upper and lower surfaces of at least one layer of layers constituting the optical film using the acrylic adhesive composition of any one of claims 1 to 16 comprising (a) 100 parts by weight of an acrylic copolymer, (b) 0.01∼10 parts by weight of a crosslinking agent, and (c) 0.5∼20 parts by weight of a polymer having an amino group, and the acrylic copolymer being obtained by copolymerizing (1) 0.5∼10 wt% of a vinylic monomer having no carboxyl group, (2) 0.5∼20 wt% of a vinylic monomer having a carboxyl group, and (3) a balance of a (meth)aciylic acid ester monomer having a C1∼C12 alkyl group.

20. The liquid crystal display according to claim 19, wherein the adhesive layer is 5∼30 µm thick.

## Patentansprüche

1. Klebende Acrylzusammensetzung, umfassend (a) 100 Gew.-Teile eines Acryl-Copolymers, (b) 0,01 bis 10 Gew.-Teile eines Vernetzungsmittels und (c) 0,5 bis 20 Gew.-Teile eines Polymers, das eine Aminogruppe aufweist, wobei das Copolymer durch Copolymerisieren von (1) 0,5 bis 10 Gew.% eines Vinylmonomers, das keine Carboxylgruppe aufweist, (2) 0,5 bis 20 Gew.% eines Vinylmonomers, das eine Carboxylgruppe aufweist, und (3) eines Restes eines (Meth)acrylsäureestermonomers mit einer C₁₋₁₂-Alkylgruppe erhalten wird.

2. Zusammensetzung gemäss Anspruch 1, wobei (1) das Vinylmonomer, das keine Carboxylgruppe aufweist, wenigstens eines, ausgewählt aus der Gruppe bestehend aus Acrylnitril, Glycidyl(meth)acrylat, Vinylacetat und Styrol, einschliesst.

3. Zusammensetzung gemäss Anspruch 1, wobei (2) das Vinylmonomer, das eine Carboxylgruppe aufweist, wenigstens eines, ausgewählt aus der Gruppe bestehend aus Acrylsäure, Methacrylsäure, Acrylsäuredimeren, Itaconsäure, Maleinsäure, Maleinsäureanhydrid, Crotonsäure und β-Carboxyethylacrylat, einschliesst.

4. Zusammensetzung gemäss Anspruch 1, wobei (3) das (Meth)acrylsäureestermonomer mit einer C₁₋₁₂-Alkylgruppe wenigstens eines, ausgewählt aus der Gruppe bestehend aus Butylacrylat, Butylmethacrylat, 2-Ethylhexylacrylat, 2-Ethylhexylmethacrylat, Methylacrylat, Methylmethacrylat, Ethylacrylat, Ethylmethacrylat, n-Propylacrylat, n-Propylmethacrylat, Isopropylacrylat, Isopropylmethacrylat, t-Butylacrylat, t-Butylmethacrylat, Pentylacrylat, Pentylmethacrylat, n-Octylacrylat, n-Octylmethacrylat, Isononylacrylat und Isononylmethacrylat, einschliesst.

5. Zusammensetzung gemäss Anspruch 1, wobei (3) das (Meth)acrylsäureestermonomer mit einer C₁₋₁₂-Alkylgruppe eine C₂₋₈-Alkylgruppe aufweist.

6. Zusammensetzung gemäss Anspruch 1, wobei (a) das Acryl-Copolymer ferner unter Verwendung von 0,01 bis 5 Gew.% eines funktionellen Monomers, das eine Hydroxylgruppe aufweist, copolymerisiert ist.

7. Zusammensetzung gemäss Anspruch 6, wobei das funktionelle Monomer, das eine Hydroxylgruppe aufweist, wenigstens eines, ausgewählt aus der Gruppe bestehend aus 2-Hydroxyethylacrylat, 2-Hydroxyethylmethacrylat, 2-Hydroxypropylacrylat, 2-Hydroxypropylmethacrylat, 2-Hydroxyethylenglykolacrylat, 2-Hydroxyethylenglykolmethacrylat, 2-Hydroxypropylenglykolacrylat und 2-Hydroxypropylenglykolmethacrylat, einschliesst.

8. Zusammensetzung gemäss Anspruch 1, wobei (a) das Acryl-Copolymer ein mittleres Molekulargewicht im Bereich von 200.000 bis 2.000.000 aufweist.

9. Zusammensetzung gemäss Anspruch 1, wobei (a) das Acryl-Copolymer eine Glasübergangstemperatur im Bereich von -50 bis -10°C und einen Vernetzungsgrad im Bereich von 50 bis 90 % aufweist.

10. Zusammensetzung gemäss Anspruch 1, wobei (b) das Vernetzungsmittel ausgewählt ist aus der Gruppe bestehend aus einem Isocyanat-Vernetzungsmittel, einem Epoxy-Vernetzungsmittel, einem Aminharz-Vernetzungsmittel, einem Aziridin-Vernetzungsmittel und einem Metallchelat-Vernetzungsmittel.

11. Zusammensetzung gemäss Anspruch 1, wobei (b) das Vernetzungsmittel wenigstens eines, ausgewählt aus der Gruppe bestehend aus Tolylendiisocyanat, Hexamethylendiisocyanat, Ethylenglykoldiglycidylether, Propylenglykoldiglycidylether, Tetraglycidylxyloldiamin und Melaminverbindungen, einschliesst.

12. Zusammensetzung gemäss Anspruch 1, wobei (c) das Polymer, das eine Aminogruppe aufweist, ein mittleres Molekulargewicht im Bereich von 1.000 bis 100.000 aufweist.

13. Zusammensetzung gemäss Anspruch 1, wobei (c) das Polymer, das eine Aminogruppe aufweist, durch Copolymerisieren von (1) 0,5 bis 10 Gew.% eines Vinylmonomers, das eine Aminogruppe aufweist, und (2) eines Restes wenigstens eines Monomers, ausgewählt aus der Gruppe bestehend aus C₁₋₂₀-(Meth)acrylsäurealkylester, C₁₋₂₀-(Meth)acrylsäurecycloalkylester, (Meth)acrylsäurebenzylester und (Meth)acrylsäurestyrol, erhalten wird.

14. Zusammensetzung gemäss Anspruch 1, wobei (c) das Polymer, das eine Aminogruppe aufweist, wenigstens eines, ausgewählt aus der Gruppe bestehend aus Aminoethylacrylat, Aminoethylmethacrylat, Dimethylaminoethylacrylat, Dimethylaminoethylmethacrylat, Dimethylaminopropylacrylat, Dimethylaminopropylmethacrylat und Vinylpyridin, einschliesst.

15. Zusammensetzung gemäss Anspruch 1, die ferner 1 bis 100 Gew.-Teile eines die Klebrigkeit verstärkenden Harzes, bezogen auf 100 Gew.-Teile des Acryl-Copolymers, umfasst.

16. Zusammensetzung gemäss Anspruch 15, wobei das die Klebrigkeit verstärkende Harz wenigstens eines, ausgewählt aus der Gruppe bestehend aus einem Kohlenwasserstoffharz, einem hydrierten Kohlenwasserstoffharz, einem Kolophoniumharz, einem hydrierten Kolophoniumharz, einem hydrierten Kolophoniumesterharz, einem Terpenharz, einem hydrierten Terpenharz, einem Terpenphenolharz, einem hydrierten Terpenphenolharz, einem polymerisierten Kolophoniumharz und einem polymerisierten Kolophoniumesterharz, einschliesst.

17. Optischer Film, umfassend eine Flüssigkristall-Polymerfilmschicht und eine polarisierende Plattenschicht, die auf eine oder beide der oberen und unteren Oberflächen der Flüssigkristall-Polymerfilmschicht laminiert ist, wobei eine Klebeschicht auf eine oder beide der oberen und unteren Oberflächen wenigstens einer der Schichten aufgebracht ist, die den optischen Film bilden, unter Verwendung der klebenden Acrylzusammensetzung gemäss einem der Ansprüche 1 bis 16, umfassend (a) 100 Gew.-Teile eines Acryl-Copolymers, (b) 0,01 bis 10 Gew.-Teile eines Vernetzungsmittels und (c) 0,5 bis 20 Gew.-Teile eines Polymers, das eine Aminogruppe aufweist, wobei das Copolymer durch Copolymerisieren von (1) 0,5 bis 10 Gew.% eines Vinylmonomers, das keine Carboxylgruppe aufweist, (2) 0,5 bis 20 Gew.% eines Vinylmonomers, das eine Carboxylgruppe aufweist, und (3) eines Restes eines (Meth)acrylsäureestermonomers mit einer C₁₋₁₂-Alkylgruppe erhalten wird.

18. Optischer Film gemäss Anspruch 17, wobei die Klebeschicht 5 bis 30 µm dick ist.

19. Flüssigkristallanzeige, umfassend einen optischen Film, der eine Flüssigkristall-Polymerfilmschicht und eine polarisierende Plattenschicht einschliesst, die auf eine oder beide der oberen und unteren Oberflächen der Flüssigkristall-Polymerfilmschicht laminiert ist, wobei eine Klebeschicht auf eine oder beide der oberen und unteren Oberflächen wenigstens einer der Schichten aufgebracht ist, die den optischen Film bilden, unter Verwendung der klebenden Acrylzusammensetzung gemäss einem der Ansprüche 1 bis 16, umfassend (a) 100 Gew.-Teile eines Acryl-Copolymers, (b) 0,01 bis 10 Gew.-Teile eines Vernetzungsmittels und (c) 0,5 bis 20 Gew.-Teile eines Polymers, das eine Aminogruppe aufweist, wobei das Copolymer durch Copolymerisieren von (1) 0,5 bis 10 Gew.% eines Vinylmonomers, das keine Carboxylgruppe aufweist, (2) 0,5 bis 20 Gew.% eines Vinylmonomers, das eine Carboxylgruppe aufweist, und (3) eines Restes eines (Meth)acrylsäureestermonomers mit einer C₁₋₁₂-Alkylgruppe erhalten wird.

20. Flüssigkristallanzeige gemäss Anspruch 19, wobei die Klebeschicht 5 bis 30 µm dick ist.

## Revendications

1. Composition acrylique adhésive, comprenant (a) 100 parties en poids d'un copolymère acrylique, (b) 0,01 à 10 parties en poids d'un agent de réticulation, et (c) 0,5 à 20 parties en poids d'un polymère ayant un groupe amino, le copolymère acrylique étant obtenu en copolymérisant (1) 0,5 à 10 % en poids (pds) d'un monomère vinylique n'ayant pas de groupe carboxyle, (2) 0,5 à 20 % en pds d'un monomère vinylique ayant un groupe carboxyle, et (3) une quantité d'équilibrage d'un monomère ester d'acide (méth)acrylique ayant un groupe alkyle en C1-C12.

2. Composition selon la revendication 1, dans laquelle le monomère vinylique (1) n'ayant pas de groupe carboxyle inclut au moins un sélectionné dans le groupe constitué par l'acrylonitrile, le (méth)acrylate de glycidyle, l'acétate de vinyle, et le styrène.

3. Composition selon la revendication 1, dans laquelle le monomère vinylique (2) ayant un groupe carboxyle inclut au moins un sélectionné dans le groupe constitué par l'acide acrylique, l'acide méthacrylique, des dimères d'acide acrylique, l'acide itaconique, l'acide maléique, l'anhydride maléique, l'acide crotonique, et l'acrylate de β-carboxyéthyle.

4. Composition selon la revendication 1, dans laquelle le monomère ester d'acide (méth)acrylique (3) ayant un groupe alkyle en C1-C12 inclut au moins un sélectionné choisi dans le groupe constitué par l'acrylate de butyle, le méthacrylate de butyle, l'acrylate de 2-éthylhexyle, le méthacrylate de 2-éthylhexyle, l'acrylate de méthyle, le méthacrylate de méthyle, l'acrylate d'éthyle, le méthacrylate d'éthyle, l'acrylate de n-propyle, le méthacrylate de n-propyle, l'acrylate d'isopropyle, le méthacrylate d'isopropyle, l'acrylate de t-butyle, le méthacrylate de t-butyle, l'acrylate de pentyle, le méthacrylate de pentyle, l'acrylate de n-octyle, le méthacrylate de n-octyle, l'acrylate d'isononyle, et le méthacrylate d'isononyle.

5. Composition selon la revendication 1, dans laquelle le monomère ester d'acide (méth)acrylique (3) ayant un groupe alkyle en C1-C12 a un groupe alkyle en C2-C8.

6. Composition selon la revendication 1, dans laquelle le copolymère acrylique (a) est copolymérisé en utilisant en outre 0,01 à 5 % en pds d'un monomère fonctionnel ayant un groupe hydroxyle.

7. Composition selon la revendication 6, dans laquelle le monomère fonctionnel ayant un groupe hydroxyle inclut au moins un sélectionné dans le groupe constitué par l'acrylate de 2-hydroxyéthyle, le méthacrylate de 2-hydroxyéthyle, l'acrylate de 2-hydroxypropyle, le méthacrylate de 2-hydroxypropyle, l'acrylate de 2-hydroxyéthylène glycol, le méthacrylate de 2-hydroxyéthylène glycol, l'acrylate de 2-hydroxypropylène glycol, et le méthacrylate de 2-hydroxypropylène glycol.

8. Composition selon la revendication 1, dans laquelle le copolymère acrylique (a) a un poids moléculaire moyen se situant entre 200 000 et 2 000 000.

9. Composition selon la revendication 1, dans laquelle le copolymère acrylique (a) a une température de transition vitreuse se situant entre -50 et -10 °C et un degré de réticulation se situant entre 50 et 90 %.

10. Composition selon la revendication 1, dans laquelle l'agent de réticulation (b) est sélectionné dans le groupe constitué par un agent de réticulation de type isocyanate, un agent de réticulation de type époxy, un agent de réticulation de type résine aminée, un agent de réticulation de type aziridine, et un agent de réticulation de type chélate métallique.

11. Composition selon la revendication 1, dans laquelle l'agent de réticulation (b) inclut au moins un sélectionné dans le groupe constitué par le diisocyanate de tolylène, le diisocyanate d'hexaméthylène, l'éthylène glycol diglycidyléther, le propylène glycol diglycidyléther, la tétraglycidyl-xylènediamine, et des composés de mélamine.

12. Composition selon la revendication 1, dans laquelle le polymère (c) ayant un groupe amino a un poids moléculaire moyen se situant entre 1 000 et 100 000.

13. Composition selon la revendication 1, dans laquelle le polymère (c) ayant un groupe amino est obtenu en copolymérisant (1) 0,5 à 10 % en pds d'un monomère vinylique ayant un groupe amino et (2) une quantité d'équilibrage d'au moins un monomère sélectionné dans le groupe constitué par un ester alkylique en C1-C20 d'acide (méth)acrylique, un ester cycloalkylique en C1-C20 d'acide (méth)acrylique, - de l'acide (méth)acrylique/benzyle, et de l'acide (méth)acrylique/styrène.

14. Composition selon la revendication 1, dans laquelle le polymère (c) ayant un groupe amino inclut au moins un sélectionné dans le groupe constitué par l'acrylate d'aminoéthyle, le méthacrylate d'aminoéthyle, l'acrylate de diméthylaminoéthyle, le méthacrylate de diméthylaminoéthyle, l'acrylate de diméthylaminopropyle, le méthacrylate de diméthylaminopropyle, et la vinylpyridine.

15. Composition selon la revendication 1, comprenant en outre 1 à 100 parties en poids d'une résine renforçant l'adhésivité basée sur 100 parties en poids du copolymère acrylique.

16. Composition selon la revendication 15, dans laquelle la résine renforçant l'adhésivité inclut au moins une sélectionnée choisie dans le groupe constitué par une résine hydrocarbonée, une résine hydrocarbonée hydrogénée, une résine de colophane, une résine de colophane hydrogénée, une résine ester de colophane, une résine ester de colophane hydrogénée, une résine terpénique, une résine terpénique hydrogénée, une résine terpène-phénol, une résine terpène-phénol hydrogénée, une résine de colophane polymérisée, et une résine ester de colophane polymérisée.

17. Film optique, comprenant une couche de film de polymère à cristaux liquides et une couche de plaque de polarisation stratifiée sur l'une ou l'autre ou les deux surfaces supérieure et inférieure de la couche de film de polymère à cristaux liquides, dans lequel une couche adhésive est appliquée sur l'une ou l'autre ou les deux surfaces supérieure et inférieure d'au moins une couche parmi des couches constituant le film optique utilisant la composition acrylique adhésive selon l'une quelconque des revendications 1 à 16, comprenant (a) 100 parties en poids d'un copolymère acrylique, (b) 0,01 à 10 parties en poids d'un agent de réticulation, et (c) 0,5 à 20 parties en poids d'un polymère ayant un groupe amino, et le copolymère acrylique étant obtenu en polymérisant (1) 0,5 à 10 % en pds d'un monomère vinylique n'ayant pas de groupe carboxyle, (2) 0,5 à 20 % en pds d'un monomère vinylique ayant un groupe carboxyle, et (3) une quantité d'équilibrage d'un monomère ester d'acide (méth)acrylique ayant un groupe alkyle en C1-C12.

18. Film optique selon la revendication 17, dans lequel la couche adhésive a une épaisseur de 5 à 30 µm.

19. Dispositif d'affichage à cristaux liquides, comprenant un film optique qui inclut une couche de film de polymère à cristaux liquides et une couche de plaque de polarisation stratifiée sur l'une ou l'autre ou les deux surfaces supérieure et inférieure de la couche de film de polymère à cristaux liquides, dans lequel une couche adhésive est appliquée sur l'une ou l'autre ou les deux surfaces supérieure et inférieure d'au moins une couche parmi des couches constituant le film optique utilisant la composition acrylique adhésive selon l'une quelconque des revendications 1 à 16, comprenant (a) 100 parties en poids d'un copolymère acrylique, (b) 0,01 à 10 parties en poids d'un agent de réticulation, et (c) 0,5 à 20 parties en poids d'un polymère ayant un groupe amino, et le copolymère acrylique étant obtenu en polymérisant (1) 0,5 à 10 % en pds d'un monomère vinylique n'ayant pas de groupe carboxyle, (2) 0,5 à 20 % en pds d'un monomère vinylique ayant un groupe carboxyle, et (3) une quantité d'équilibrage d'un monomère ester d'acide (méth)acrylique ayant un groupe alkyle en C1-C12.

20. Dispositif d'affichage à cristaux liquides selon la revendication 19, dans lequel la couche adhésive a une épaisseur de 5 à 30 µm.
